# EUROPÄISCHE PATENTSCHRIFT

(11) **EP 2 454 013 B1**
(45) Veröffentlichungstag und Bekanntmachung des Hinweises auf die Patenterteilung: **14.11.2018**
(21) Anmeldenummer: 10730773.8
(22) Anmeldetag: 05.07.2010
(51) Int. Cl.: B01J 4/00, C10J 3/26, C10J 3/30, C10J 3/32, C10J 3/66

(54) **REAKTOR UND VERFAHREN ZUR VERGASUNG VON BIOMASSE**
REACTOR, AND METHOD FOR THE GASIFICATION OF BIOMASS
RÉACTEUR ET PROCÉDÉ DE GAZÉIFICATION DE BIOMASSE

(30) Priorität: 14.07.2009 AT 11022009
(43) Veröffentlichungstag der Anmeldung: 23.05.2012
(73) Patentinhaber: Schiefer, Erwin, 8342 Gnas (AT)
(72) Erfinder: Schiefer, Erwin, 8342 Gnas (AT)
(74) Vertreter: Lang, Christian
(86) Internationale Anmeldenummer: PCT/EP2010/059570
(87) Internationale Veröffentlichungsnummer: WO 2011/006789

(56) Entgegenhaltungen:
- EP-A1- 1 148 295
- WO-A1-2005/028595
- WO-A1-2006/021017
- WO-A2-2006/055355
- US-A- 5 443 572

## Beschreibung

Die Erfindung betrifft einen Reaktor zur Vergasung von Biomasse, mit einem Reaktorbehälter, der einen Vergasungsraum mit einer Oxidationszone definiert, welcher Oxidationszone von außerhalb des Reaktorbehälters ein sauerstoffhaltiges Vergasungsmittel, insbesondere Luft, zuführbar ist, wobei kontinuierlich Biomasse zur Oxidationszone im Vergasungsraum förderbar ist, sowie im Reaktorbehälter Luftzuführelemente mit Austrittsöffnungen im Bereich der Oxidationszone angeordnet sind, die sich in Förderrichtung der Biomasse erstrecken.

Ziel der Vergasung von Biomasse ist die Erzeugung von Generatorgas (auch als Rohgas, Brenngas oder Schwachgas bezeichnet). Daneben entstehen feste und flüssige Rückstände. Feste Rückstände sind im Wesentlichen Asche und nicht umgesetzter Kohlenstoff in Form von Koks, Ruß und Karbonaten. Flüssige Rückstände sind Pyrolyseöl und Kondensat, das Teere und Phenole enthält. Bei der Vergasung wird versucht, einen möglichst großen Teil der eingebrachten Energie des Brennstoffs, d.h. der Biomasse, auf das brennbare Generatorgas zu übertragen. Daher sind alle nicht brennbaren Komponenten des Gases sowie die festen und flüssigen Rückstände prinzipiell unerwünscht.

Unter der Vergasung eines Brennstoffs versteht man die thermische Umsetzung eines festen Kohlenstoffträgers mit einem sauerstoffhaltigen Vergasungsmittel in ein brennbares Gas. Die Vergasung erfolgt dabei bei unterstöchiometrischer Sauerstoffzufuhr. Bei Verwendung von Luft als Vergasungsmittel entspricht die Vergasung einer gesteuerten Verbrennung unter Luftmangel. Die bei der Vergasung des Brennstoffs Biomasse für die Reaktion notwendige hohe Temperatur entsteht durch Reaktion des Brennstoffs mit dem chemisch gebundenen Sauerstoff und der zugeführten Luft. Die Regelung der Verbrennungsluftzufuhr muss dabei besonders sensibel erfolgen, da ein Unterschreiten der Mindestluftmenge zum Erliegen des Prozesses führen kann, während eine zu hohe Luftmenge die Ausbeute an Gas reduziert.

Allgemein unterscheidet man im Vergasungsreaktor entsprechend den Teilprozessen der Vergasung vier Reaktionszonen, die im Wesentlichen durch die sich einstellenden Temperaturniveaus bestimmt sind:
- die Trocknungszone, in der die im Holz bzw. in der Biomasse enthaltene Feuchte verdampft wird;
- die Pyrolysezone, in der typischerweise bei Temperaturen zwischen 200°C und 500°C eine Zersetzung des Holzes stattfindet und die flüchtigen Komponenten aus der Biomassematrix frei gesetzt werden;
- die Oxidationszone, in der bei Temperaturen etwa zwischen 500°C und 2000°C die Vergasungsreaktion der festen Biomasse sowie die Aufspaltung der Kohlenwasserstoffverbindungen aus der Pyrolysezone erfolgen;
- die Reduktionszone, in der die Reduktion der Oxidationsprodukte Kohlendioxid und Wasser an der glühenden Holzkohle bei durchschnittlichen Temperaturen von rund 500°C erfolgt und dabei das eigentliche Brenngas entsteht.

Aus dem Stand der Technik sind unterschiedliche Ausführungsformen von Vergasungsreaktoren für Biomasse bekannt.

In der EP 0 565 935 A1 wird beispielsweise ein Gleichstrom-Gasgenerator mit einem ringförmigen Feuerraum sowie einer darin mittig angeordneten wendelförmigen Förderschraube gezeigt. Die wendelförmige Förderschraube dreht sich um eine vertikale Achse und dient dazu, das zu vergasende biogene Material aus einem Zwischenspeicher von unten in den oberhalb gelegenen Feuerraum zu fördern. Biogenes Material, welches den Feuerraum bereits durchquert hat, aber noch nicht vollständig vergast ist, gelangt somit im Gegenstrom von oben zurück auf das darunter befindliche, noch zu vergasende biogene Material, das von der wendelförmigen Förderschraube erneut in der Transportkammer nach oben in den Feuerraum gefördert wird. Somit wird das biogene Material bis zu seiner vollständigen Vergasung innerhalb des Feuerraums bewegt. Der ringförmige Feuerraum weist in seiner Oxidationszone sowohl außen- als auch innenseitige Löcher zur Zufuhr der Primärverbrennungsluft auf.

Nachteilig an dieser Ausführung wird die rotierende Förderschnecke mittig durch den Feuerraum geführt und somit in der sehr heißen Oxidationszone zumindest einer sehr hohen thermischen Belastung ausgesetzt. Ein Materialverzug der wendelförmigen Förderschraube aufgrund der herrschenden hohen Temperaturen und dadurch bedingt ein Schleifen oder gar Steckenbleiben der Wendel an der Wandung der sie umgebenden Transportkammer kann nicht ausgeschlossen werden. Weiters ist die hier gewählte Prozessführung der Luftzufuhr im Kreuzstrom problematisch. Durch die seitlich in den Feuerraum und somit quer zur nach oben transportierten Biomasse eingebrachte Verbrennungsluft kann nachteilig noch nicht gänzlich vergaste Biomasse nach oben durch den Feuerraum hindurch gemeinsam mit dem aufsteigenden Luftstrom in die Reduktionskammer mitgerissen werden. Eine unvollständige Vergasung der Biomasse und ein erhöhter Ascheanfall im Reaktor sind die unerwünschten Folgen.

In der AT 505.188 wird ein Reaktor zur Vergasung von Biomasse gezeigt, bei dem die Biomasse von oben durch eine Beschickungsöffnung in das Innere des Reaktors gelangt. Die Zufuhr des Vergasungsmittels erfolgt dabei unabhängig von den gezeigten Ausführungsvarianten jeweils in Förderrichtung der Biomasse von oben nach unten. Die Vergasungsmittelzuführelemente sind dazu als flache Hohlkörper ausgebildet, die beispielsweise als ebene Platten oder als mehrere ringförmige Elemente, die in Oxidationszone jeweils Austrittsöffnungen für das Vergasungsmittel aufweisen.

Nachteilig an den flächigen Hohlkörpern, die als Luftzuführelemente in der in AT 505.188 gezeigten Ausführung vorgesehen sind, ist deren schlechte Kühlbarkeit aufgrund der geringen Oberfläche und die damit einhergehende geringe Lebensdauer durch die starke thermische Materialdehnung. Weiters ist die Luftzufuhr mit den derartigen Luftzuführelementen vergleichsweise schlecht steuerbar und deren Raumbedarf bezogen auf das freie Reaktorvolumen groß.

Eine weitere Ausführungsvariante eines Vergasungsreaktors zeigt die DE 30 42 200 A1. Darin wird ein Vergasungsreaktor mit einem Reaktorschacht mit rechteckigem Querschnitt vorgestellt, der gegenüber einem üblicherweise meist kreisförmig ausgeführten Reaktorschacht eine erhöhte Durchsatzleistung ermöglicht. Die Luftzufuhr erfolgt in dieser Ausführung über in den Schachtlängswandungen gleichmäßig verteilt angeordnete Luftdüsen sowie über im mittleren Bereich des Reaktorraums gleichmäßig von oben verteilt angeordnete Luftzuführungslanzen. Der Reaktorinnenraum kann durch Trennwände in mehrere Kammern unterteilt sein, die sich zur Steuerung der Durchsatzleistung des Vergasungsreaktors hinzu- bzw. abschalten lassen. An seinem unteren Ende ist im Reaktorraum ein Aschenrost samt einem darunter angeordneten Förderaggregat für den Aschenaustrag vorgesehen.

Nachteilig an dieser Ausführung ist, dass sich einzelne Reaktionszonen mit jeweils unterschiedlichen Betriebsbedingungen im Reaktorraum oberhalb des Aschenrosts nicht oder nur unzureichend einstellen und kontrollieren lassen. Die Oxidationszone ist bei dieser Ausführung vergleichsweise klein und wird von der zu vergasenden Biomasse rasch passiert. Im Raum unterhalb des Aschenrosts muss daher eine Möglichkeit zur Zufuhr von Sekundärluft für die Nachvergasung von noch unverbrannten Materialien vorgesehen werden. Weiters sind die Luftzuführungslanzen direkt oberhalb der Oxidationszone angeordnet bzw. ragen mit ihren Spitzen in diese hinein. Das Material der Luftzuführungslanzen wird somit besonders hohen thermischen Belastungen ausgesetzt, was einen hohen Verschleiß der Luftzuführungslanzen nach sich zieht.

Aus der Veröffentlichung der europäischen Patentanmeldung EP 1 148 295 A1 ist ein Vergasungs- und Schmelzofen für städtischen oder industriellen Müll bekannt, in den auf dessen zentraler Achse eine Lanze eingeführt ist, über die ein Verbrennungsgas zugeführt wird. Bei dem Verbrennungsgas handelt es sich um Sauerstoff oder ein sauerstoffhaltiges Gas. Das Verbrennungsgas wird auch über seitlich in den Innenraum des Ofens ragende Einlässe ("tuyeres") zugeführt. Ferner wird dem Ofen über ebenfalls seitlich in diesen hineinragende Einlässe ein gasförmiger Brennstoff wie LPG oder LNG zugeführt. Durch den Verbrennungsgasaustritt aus der zentral angeordneten Lanze wird eine besonders heiße zentrale Schmelzzone erzeugt, die Temperaturen von 2000 °C oder mehr erreicht, sodass in dem Müll enthaltene Metalle geschmolzen werden und aus der Schmelze rückgewonnen werden können. Ferner erfolgt eine Dekomposition von organischen Bestandteilen in ein brennbares Nutzgas, welches aus dem Ofen abgeführt wird.

Aus der Veröffentlichung der internationalen Patentanmeldung WO 2006/021017 A1 ist ein Reaktor zur Vergasung von Biomasse bekannt, bei dem lanzenförmige Luftzuführelemente in Förderrichtung der Biomasse in die Oxidationszone hineinragen.

Aus der Veröffentlichung des US-Patents US 5,443,572 A ist ein Induktionsofen zur Dekomposition von giftigen Stoffen bekannt, bei welchem die zu zersetzenden Stoffe über eine zentrale Lanze in ein Bad aus geschmolzenem Metall eingetragen werden, wobei die hohe Temperatur der Metallschmelze die gewünschte Zersetzung bewirkt. Die Lanze ragt in das Metallbad hinein, um eine vollständige Zersetzung sicher zu stellen. Damit die Lanze dieser thermischen Belastung standhält, ist sie gemäß dieser Druckschrift mit einer Wasserkühlungsstruktur und einer perforierten, wärmebeständigen Isolierschicht versehen. Durch die Perforation gelangt das Wasser in die Metallschmelze und verdampft dort. In den Ofen ragt ferner seitlich ein Zuführelement für ein Oxidationsgas wie Luft oder Sauerstoff.

Wesentlich beim Betrieb eines Festbettreaktors zur Biomassevergasung ist es, ein Reaktorprofil mit mehreren Reaktionszonen mit jeweils unterschiedlichen Betriebsparametern während der gesamten Betriebsdauer stabil zu halten sowie den Vergasungsreaktor an den jeweiligen Rohstoff angepasst betreiben zu können. In den zuvor beschriebenen Ausführungsvarianten können diese Voraussetzungen eines optimalen Vergaserbetriebs nicht oder nur unzureichend erfüllt werden.

Es ist somit die Aufgabe der vorliegenden Erfindung einen Reaktor zur Vergasung von Biomasse bereitzustellen, die die geschilderten Nachteile des Standes der Technik vermeidet.

Diese Aufgabe wird bei einer Aufbereitungsvorrichtung gemäß dem Oberbegriff des Anspruches 1 mit den Merkmalen des kennzeichnenden Teiles des Anspruchs 1 gelöst. Die Unteransprüche betreffen weitere vorteilhafte Ausgestaltungen der Erfindung.

Vorteilhaft umfasst ein erfindungsgemäßer Reaktor zur Vergasung von Biomasse, mit einem Reaktorbehälter, der einen Vergasungsraum mit einer Oxidationszone definiert, welcher Oxidationszone von außerhalb des Reaktorbehälters ein sauerstoffhaltiges Vergasungsmittel, insbesondere Luft, zuführbar ist, wobei kontinuierlich Biomasse zur Oxidationszone im Vergasungsraum förderbar ist, Luftzuführelemente im Inneren des Reaktorbehälters, deren Austrittsöffnungen im Bereich der Oxidationszone angeordnet sind, die sich in Förderrichtung der Biomasse erstrecken, wobei die Luftzuführelemente jeweils in Lanzenform ausgebildet sowie entlang zumindest eines Isolierungsabschnitts mit einer außenseitigen Isolierungsschicht versehen sind.

Die außenseitig angeordnete Isolierungsschicht des Isolierungsabschnitts ist beispielsweise aus einem feuerfesten, keramischen Material hergestellt. Diese Isolierungsschicht schützt nicht nur das darunter bzw. innerhalb befindliche lanzenförmige Luftzuführelement vor zu großer thermischer Materialbelastung, sondern wirkt gleichzeitig als Wärmespeicher, der die Wärme aus der Oxidationszone durch Wärmestrahlung vorteilhaft an die daran oberhalb anschließende Pyrolysezone, die auch als Vorvergasungszone bezeichnet wird, abgibt. Der Isolierungsabschnitt beginnt zweckmäßig am vorderen, freien Ende der Luftzuführelemente nahe den Austrittsöffnungen für das Vergasungsmittel und erstreckt sich entlang der Luftzuführelemente bis an den oberen Rand der heißen Oxidationszone bzw. bis zu einer Zone des Vergasungsraums mit moderaten Reaktionstemperaturen. Die Isolierungsabschnitte an den lanzenförmigen bzw. rohrförmigen Luftzuführelementen weisen somit vorteilhaft eine vergleichsweise große äußere Oberfläche zur Wärmeabgabe bei gleichzeitig geringem Raumbedarf auf.

Besonders zweckmäßig sind bei einem erfindungsgemäßen Reaktor die Luftzuführelemente gruppenweise mit einer gemeinsamen Isolierungsschicht entlang zumindest eines Isolierungsabschnitts versehen. Entsprechend den jeweiligen Anforderungen können bei der Konstruktion eines Vergasungsreaktors die einzelnen lanzenförmigen Luftzuführelemente auch beispielsweise paarweise oder gruppenweise gemeinsam isoliert werden.

Gemäß einem weiteren Merkmal der Erfindung sind bei einem gattungsgemäßen Reaktor die Luftzuführelemente entlang zumindest eines Wärmetauschabschnitts mit einem außenseitigen Wärmetauscher versehen. Dieser Wärmetauschabschnitt entlang der lanzenförmigen Luftzuführelemente ist zweckmäßig oberhalb an den darunter liegenden Isolierungsabschnitt angrenzend angeordnet. Durch den außenseitigen Wärmetauscher kann vorteilhaft die Reaktionstemperatur der Biomasse im Bereich des Wärmetauschabschnitts, der sich beispielsweise in die Vorvergasungszone bzw. bis in die darüber gelegene Trocknungszone erstreckt, geregelt werden. Durch die Möglichkeit, den Wärmetauscher auch als Kühler zu verwenden, kann eine unerwünschte Überhitzung der Biomasse oberhalb der Oxidationszone vermieden und somit vorteilhaft während der Vergasung ein stabiles Temperaturprofil in den Reaktionszonen des Vergasungsreaktors gewährleistet werden.

In einer bevorzugten Ausführungsform der Erfindung sind bei einem Reaktor die Luftzuführelemente über den Querschnitt des Vergasungsraums verteilt angeordnet.

In einer zweckmäßigen Ausführungsvariante eines erfindungsgemäßen Reaktors sind die Luftzuführelemente ringförmig im Vergasungsraum angeordnet.

Wesentlich ist bei der Anordnung der Luftzuführelemente im Vergasungsraum, eine möglichst homogene Zufuhr des Vergasungsmittels über den gesamten Querschnitt zu erzielen. Mit den jeweils lanzenförmigen bzw. rohrförmigen Luftzuführelementen steht eine Bauform zur Verfügung, die eine jeweils individuell an unterschiedliche Reaktorbauformen oder Betriebsbedingungen angepasste Anordnung der Luftzuführelemente im Vergasungsraum ermöglicht.

Vorteilhaft sind bei einem erfindungsgemäßen Reaktor die Luftzuführelemente gemeinsam oder gruppenweise mit einer Versorgungsleitung verbunden. Die Versorgungsleitung zur Zufuhr des Vergasungsmittels bzw. der Luft kann somit jeweils für jedes einzelne Luftzuführelement separat erfolgen, oder es werden mehrere Luftzuführelemente jeweils gruppenweise über eine Versorgungsleitung mit dem Vergasungsmittel beaufschlagt, oder es ist eine einzige Versorgungsleitung ringförmig mit sämtlichen Luftzuführelementen verbunden.

In einer vorteilhaften Ausgestaltungsform ist bei einem erfindungsgemäßen Reaktor eine Vorrichtung zur Temperierung des Vergasungsmittels vorgesehen. Das Vergasungsmittel, beispielsweise Luft, wird dabei vor dem Einblasen in den Vergasungsraum in der Temperierungsvorrichtung vorgewärmt. Beispielsweise ist die Temperierungsvorrichtung als ein Wärmeübertrager zur Gasvorwärmung ausgeführt, in dem die Abwärme des Vergasungsreaktors zur Vorwärmung des Vergasungsmittels genutzt wird.

Weiters ist es denkbar, Dampf zur Vorwärmung oder auch zur Beimischung in das Vergasungsmittel zu verwenden. Die Vorrichtung zur Temperierung des Vergasungsmittels weist dazu zweckmäßig auch einen Anschluss zur Dampfzufuhr auf.

In einer weiteren Ausführungsform zur Lösung der erfindungsgemäßen Aufgabe ist bei einem Reaktor zumindest ein Abschnitt der Reaktorwandung und/oder von Einbauten in der Oxidationszone, insbesondere ein oberhalb der Austrittsöffnungen der Luftzuführelemente gelegener Abschnitt temperierbar. Es gilt wie bereits zuvor erwähnt, eine Verschiebung der Oxidationszone nach oben in die Vorvergasungszone bzw. in die darüber gelegene Trocknungszone zu vermeiden und im Vergasungsreaktor ein stabiles Temperaturprofil während der Betriebsdauer zu gewährleisten. Dazu sind auch Abschnitte an der Reaktorwandung und/oder von Einbauten im Vergasungsraum temperierbar ausgestattet.

Insbesondere bei größeren Bauformen eines erfindungsgemäßen Vergasungsreaktors kann es vorteilhaft sein, zusätzliche Einbauten im Vergasungsraum vorzusehen und diese ebenfalls temperierbar auszurüsten. Durch die Möglichkeit, gezielt in einzelnen Abschnitten im Vergasungsraum Energie zuzuführen oder auch Energie zu entziehen, können die Reaktionstemperaturen lokal beeinflusst und somit der Reaktionsverlauf der Biomassevergasung positiv beeinflusst bzw. kontrolliert werden.

Vorteilhaft ist bei einem erfindungsgemäßen Reaktor zumindest ein Abschnitt der Reaktorwandung und/oder von Einbauten oberhalb der Oxidationszone des Vergasungsraums beheizbar. Durch die Möglichkeit, beispielsweise die oberhalb der Vorvergasungszone liegende Trocknungszone mit externer Energie zu versorgen und die Biomasse sehr effizient zu trocknen, kann der Verlauf der Biomassevergasung und die Ausbeute an erzeugtem Brenngas entsprechend positiv beeinflusst werden.

Zweckmäßig sind bei einem erfindungsgemäßen Reaktor Wärmespeicherelemente an zumindest einem Abschnitt der Reaktorwandung und/oder von Einbauten in der Oxidationszone angeordnet. Vergleichbar mit der Isolierungsschicht im Isolierungsabschnitt der Luftzuführelemente wird auch von den Wärmespeicherelementen, die abschnittsweise an der Reaktorwandung und/oder von Einbauten in der Oxidationszone angeordnet sind, Strahlungswärme aus der Oxidationszone an die oberhalb anschließende Vorvergasungszone abgegeben. Der Verlauf des Temperaturprofils im Inneren des Vergasungsraumes wird dadurch vergleichmäßigt.

Besonders vorteilhaft ist bei einem erfindungsgemäßen Reaktor oberhalb der Oxidationszone zumindest ein Sensor zur Überwachung der Temperatur vorgesehen. Durch die Positionierung eines Temperatursensors oberhalb der Oxidationszone wird rasch die jeweilige Energiefreisetzungsrate bzw. Ausgasgeschwindigkeit der eingesetzten biogenen Rohstoffe erfasst.

In einer alternativen Ausführungsform ist bei einem erfindungsgemäßen Reaktor am Austritt des Temperiermediums zumindest ein Sensor zur Überwachung der Temperatur vorgesehen. Die Rücklauftemperatur des Temperiermediums, das die Wärmetauscher der Wärmetauschabschnitte entlang der Luftzuführelemente und/oder die Wärmetauscher entlang der Temperierabschnitte an der Reaktorwandung und/oder die Wärmetauscher an Einbauten im Inneren des Vergasungsraums durchströmt, wird von einem eigenen Temperatursensor überwacht.

Auch Kombinationen von zumindest einem Temperatursensor, der etwa oberhalb der Oxidationszone im Inneren des Vergasungsraums angeordnet ist, mit zumindest einem Temperatursensor, der die Rücklauftemperatur und/oder die Vorlauftemperatur des Temperiermediums überwacht, sind denkbar und werden von der Erfindung umfasst.

Zweckmäßig steuert bei einem erfindungsgemäßen Reaktor eine Steuereinheit anhand der Signale eines Sensors zur Temperaturüberwachung die Vorrichtung zur Temperierung des Vergasungsmittels und/oder die Temperierung der Wärmetauscher der Luftzuführelemente und/oder des Temperierabschnittes der Reaktorwandung und/oder des Temperierabschnittes von Einbauten innerhalb des Vergasungsraums oberhalb der Oxidationszone und/oder das Verhältnis zwischen dem zugeführten Vergasungsmittel und der Zuluft und/oder die Zufuhr von Dampf.

Die Steuereinheit ist dazu zweckmäßig mittels Steuerleitungen mit dem zumindest einen Temperatursensor verbunden. Die Signale des Temperatursensors werden von der Steuereinheit erfasst und ausgewertet und dienen zur Steuerung zumindest einer der folgenden Vorrichtungen:
- die Vorrichtung zur Temperierung des Vergasungsmittels, in der das Vergasungsmittel bzw. die Luft vorgewärmt werden kann;
- die Temperierung der Wärmetauscher entlang der Wärmetauschabschnitte der Luftzuführelemente;
- die Temperierung des Temperierabschnitts an der Reaktorwandung;
- die Temperierung des Temperierabschnitts an Einbauten innerhalb des Vergasungsraums;
- das Verhältnis zwischen dem zugeführten Vergasungsmittel und der Zuluft, die gemeinsam mit dem zugeführten Biomassestrom in den Vergasungsraum gelangt;
- die Zufuhr von Dampf, der beispielsweise dem Vergasungsmittel beigemischt werden kann.

Insbesondere das Luftverhältnis zwischen dem direkt eingeblasenen Vergasungsmittel bzw. der direkt eingeblasenen Luft zur Zuluft, die mit der Biomasse in die Oxidationszone einströmt, ist wesentlich für die Steuerung der Vergasungsreaktion bzw. für die Einstellung des Verlaufs der oberen Grenze der Oxidationszone.

In einer weiteren Fortbildung der erfindungsgemäßen Vorrichtung weist ein Reaktor eine Verteilereinrichtung für Biomasse auf, umfassend einen Behälter mit zumindest einer an seinem unteren Abschnitt exzentrisch angeordneten Öffnung, wobei der Behälter im Vergasungsraum an einer Antriebswelle befestigt drehbar beweglich angeordnet ist. Die Verteilereinrichtung ist zweckmäßig am oberen Abschnitt des Vergaserraums vorgesehen. Die Biomasse gelangt durch einen Befüllschacht aufgrund der Schwerkraft in das Innere des Vergasungsraums und gelangt von oben in den Behälter. Durch die Drehbewegung des rotierenden Behälters wird die Biomasse radial nach außen befördert und verlässt durch eine oder mehrere Öffnungen, die exzentrisch beispielsweise im Boden oder in einem unteren Abschnitt des Behälters vorgesehen sind, den Behälter und gelangt in die Trocknungszone im oberen Abschnitt des Vergasungsraums.

Zweckmäßig ist bei einem erfindungsgemäßen Reaktor die Antriebswelle des Behälters senkrecht stehend von außerhalb des Reaktorbehälters in den Vergasungsraum durchgeführt.

In einer besonders vorteilhaften Ausführung ist bei einem gattungsgemäßen Reaktor die Antriebswelle mit einem eigenen Antrieb bewegungsmäßig gekoppelt.

In einer weiteren vorteilhaften Ausgestaltung eines erfindungsgemäßen Reaktors ist an der Verteilereinrichtung an der Unterseite des Behälters ein Rührwerk angeordnet. Durch das Rührwerk, das sich an der Unterseite des Behälters befindet, wird die Biomasse im Vergasungsraum gleichmäßig verteilt und es wird eine unerwünschte Kegel- oder Brückenbildung bzw. Verblockung im Vergasungsreaktor durch die aufgegebene Biomasse vermieden. Das Trocknungsverhalten und in weiterer Folge das Vergasungsverhalten der Biomasse werden dadurch wesentlich verbessert.

Weitere Merkmale der Erfindung ergeben sich aus der nachfolgenden Beschreibung von Ausführungsbeispielen und unter Bezugnahme auf die Zeichnung.
Fig. 1 zeigt in einer schematischen Schnittansicht von der Seite einen Ausschnitt eines erfindungsgemäßen Reaktors zur Vergasung von Biomasse.
Fig. 2 zeigt in einer stark vereinfachten Darstellung eine erfindungsgemäße Verteilereinrichtung für Biomasse.

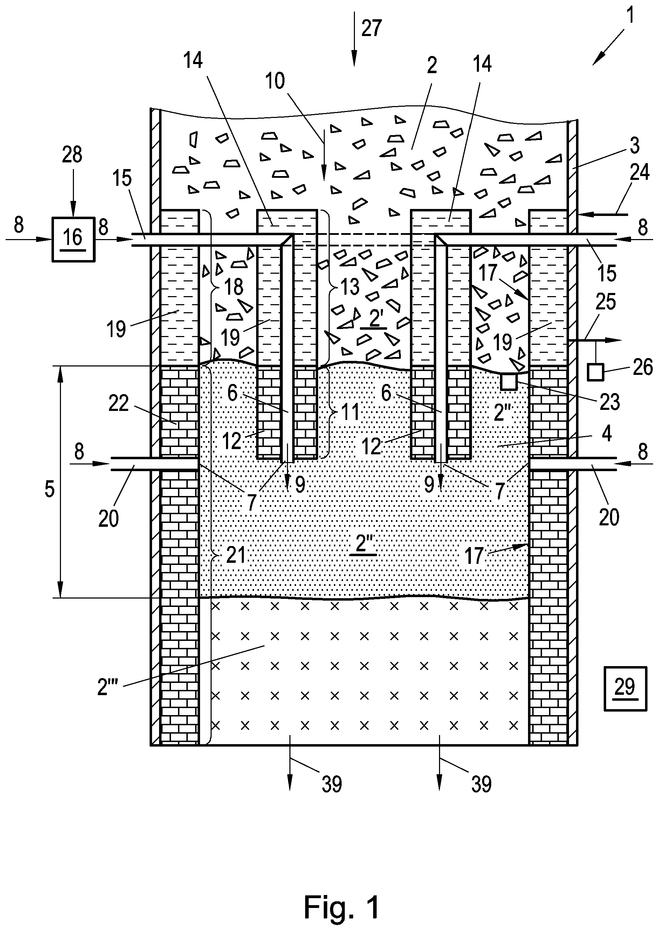

In Fig. 1 ist ein erfindungsgemäßer Reaktor 1 zur Vergasung von Biomasse 2 dargestellt. Der Reaktor 1 umfasst einen Reaktorbehälter 3 mit einem Vergasungsraum 4, der sich im Inneren des Reaktorbehälters 3 befindet. Die Biomasse 2 gelangt von oben beispielsweise durch einen nicht näher dargestellten Befüllschacht in den Vergasungsraum 4 und erreicht nach einer gewissen Verweilzeit nach Passieren der Trocknungszone bzw. der Vorvergasungszone die Oxidationszone 5 des Reaktors 1. In der Oxidationszone 5 münden mehrere jeweils lanzenförmige Luftzuführelemente 6, die an ihrem jeweils unteren, freien Ende Austrittsöffnungen 7 zur Zufuhr eines Vergasungsmittels 8 in die Oxidationszone 5 aufweisen. Als Vergasungsmittel wird hier Luft 8 in Pfeilrichtung 9 der Oxidationszone 5 zugeführt. Die lanzenförmigen bzw. rohrförmigen Luftzuführelemente 6 sind in Förderrichtung 10 der Biomasse 2 angeordnet. Die Ausströmrichtung 9 der Luft 8 aus den Austrittsöffnungen 7 der Luftzuführelemente 6 entspricht somit der Förderrichtung 10 der Biomasse 2.

An den Austrittsöffnungen 7 können erforderlichenfalls auch Vergasungsmittelverteileinrichtungen angebracht sein, die eine besonders gleichmäßige Verteilung des Vergasungsmittels in der Oxidationszone bewirken. Diese Vergasungsmittelverteileinrichtungen sind in Fig. 1 nicht dargestellt.

Beginnend an den unteren, freien Enden nahe der Austrittsöffnungen 7 jedes Luftzuführelements 6 ist entlang eines Isolierungsabschnitts 11, der sich jeweils in Längsrichtung der Luftzuführelemente 6 erstreckt, eine außenseitige Isolierungsschicht 12 vorgesehen, die beispielsweise aus einem feuerfesten keramischen Material hergestellt ist. Der Isolierungsabschnitt 11 reicht während des Betriebs etwa bis an den oberen Rand der Oxidationszone 5. Daran oberhalb anschließend erstreckt sich entlang der Länge jedes Luftzuführelements 6 ein Wärmetauschabschnitt 13 mit einem Wärmetauscher 14, der jeweils außenseitig an den Luftzuführelementen 6 angeordnet ist.

Wie in Fig. 1 dargestellt sind die Luftzuführelemente 6 gleichmäßig über den Querschnitt des Vergasungsraums 4 verteilt und mit einer gemeinsamen Versorgungsleitung 15 zur Zufuhr von Luft 8 verbunden. Die Versorgungsleitung 15 ist mit einer Temperiervorrichtung 16 zur Vorwärmung der Luft 8 ausgestattet. Auch die Möglichkeit einer Dampfzufuhr 28 zur Beimischung zur Luft 8 ist bei der Temperiervorrichtung 16 vorgesehen.

Auch im Bereich der Reaktorwandung 17 ist ein hier umlaufend angeordneter Temperierabschnitt 18 vorgesehen, der beispielsweise einen Wärmetauscher 14 mit einem darin befindlichen Temperiermedium 19 umfasst. Der Temperierabschnitt 18 befindet sich oberhalb der Oxidationszone 5 des Reaktors 1. Die Reaktorwandung 17 ist etwa auf Höhe der Austrittsöffnungen 7 der Luftzuführelemente 6 mit mehreren sekundären Luftzuführelementen 20 versehen, die zusätzlich zu den lanzenförmigen Luftzuführelementen 6 Luft 8 in die Oxidationszone 5 einbringen.

Zusätzliche Einbauten im Vergasungsraum 4 oberhalb der Oxidationszone 5, die beispielsweise ebenfalls mit einem Temperierabschnitt umfassend einen Wärmetauscher mit einem darin befindlichen Temperiermedium ausgestattet sind, sind in der Fig. 1 nicht dargestellt. Insbesondere bei größeren Bauformen eines gattungsgemäßen Vergasungsreaktors 1 kann durch derartige zusätzliche Einbauten die Wärmeübertragungsfläche des Temperierabschnittes deutlich vergrößert werden und somit die Steuerung der Temperaturführung in den unterschiedlichen Reaktionszonen des Reaktors 1 weiter verbessert werden.

In der Oxidationszone 5 und der unterhalb anschließenden Reduktionszone ist die Reaktorwandung 17 mit mehreren einen Wärmespeicherabschnitt 21 bildenden Wärmespeicherelementen 22 versehen. Die Wärmespeicherelemente 22 sind wie auch die Isolierungsschicht 12 der Luftzuführelemente 6 ebenfalls aus einem hitzbeständigen, keramischen Material hergestellt.

Am oberen Ende der Oxidationszone 5 ist ein Temperatursensor 23 angeordnet, der eine Temperaturänderung innerhalb des Vergasungsraums 4 bzw. am oberen Ende der Oxidationszone 5 erfasst und die Messdaten an eine Steuereinheit 29 weiterleitet. Zusätzlich ist bei der in Fig. 1 dargestellten Ausführung auch in der Kreislaufleitung des Temperiermediums 19 an der Austrittsseite 25 des Wärmetauschers 14 ein Temperatursensor 26 vorgesehen, der eine Änderung der Rücklauftemperatur des Temperiermediums 19 bzw. eine Veränderung der Temperaturdifferenz zwischen der Vorlauftemperatur am Eintritt 24 des Temperiermediums 19 und der Rücklauftemperatur am Austritt 25 des Temperiermediums 19 erfasst.

Die Steuerleitungen zwischen der Steuereinheit 29 und den Temperatursensoren 23 bzw. 26 sind zur besseren Übersicht in Fig. 1 nicht dargestellt.

An der Oberseite des Reaktors 1 gelangt durch den Aufgabeschacht gemeinsam mit der aufgegebenen Biomasse 2 auch eine Zuluft 27 in die Oxidationszone 5. Das Mengenverhältnis zwischen der von den Luftzuführelementen 6 bzw. von den sekundären Luftzuführelementen 20 zugeführten Luft 8 und der Zuluft 27 ist ein wesentlicher Betriebsparameter zur Steuerung der Vergasungsreaktion. Anhand der Messdaten der Temperatursensoren 23 bzw. 26 wird von der Steuereinheit 29 auch das Mengenverhältnis zwischen der zugeführten Luft 8 und der Zuluft 27 gesteuert. Die zur Steuerung des Mengenverhältnisses zwischen Luft 8 und Zuluft 27 allenfalls erforderlichen Durchflusszähler, Klappen, Ventilatoren, Frequenzumrichter oder Ventile in den einzelnen Zuleitungen sowie die entsprechenden Steuerleitungen von den Armaturen zur Steuereinheit 29 sind der Übersichtlichkeit wegen in Fig. 1 nicht dargestellt.

Die Biomasse 2, beispielsweise Hackschnitzel, ändert sich während ihrer Verweildauer im Vergasungsreaktor 1 sowohl in ihrer Zusammensetzung, als auch in ihrem Aggregatzustand. Kurz nach Eintritt der Biomasse 2 in den Vergasungsraum 4 in Pfeilrichtung 10 erfolgt im Trocknungsabschnitt die Verdampfung des im Holz enthaltenen Wassers. Der entstehende Wasserdampf wird entweder in den nachfolgenden, darunter liegenden Reaktionszonen umgewandelt.

In der anschließend folgenden Pyrolysezone wird die nun bereits getrocknete Biomasse 2' unter Luftzugabe über die Biomasseschüttung zersetzt. Es bilden sich bei Temperaturen bis 500°C die zuvor bereits genannten Zersetzungsprodukte Schwelgas, Kohlenwasserstoff in Form von Kohle und Kondensat. Dabei werden auch die makromolekularen Bestandteile des in der Trocknungszone getrockneten Holzes, beispielsweise Zellulose sowie Lignin, thermisch zerlegt.

Die verbleibende Biomasse 2", die weiter in die Oxidationszone 5 gelangt, besteht im Wesentlichen bereits aus gasförmigen, flüchtigen Komponenten des Holzes. Als Feststoff liegt im Wesentlichen nur mehr Kohlenstoff in Form von Holzkohle vor.

In der nachfolgenden Reduktionszone wird die Biomasse 2"', im Wesentlichen Kohlendioxid und Wasser, an der glühenden Holzkohle reduziert und es entstehen Kohlenmonoxid, Wasserstoff und Methan als Komponenten des zu erzeugenden Brenngases 39. Das Brenngas 39 verlässt im unteren Abschnitt des Reaktorbehälters 3 den Reaktor 1, wird allenfalls noch Nachbehandlungseinrichtungen und/oder Reinigungseinrichtungen zugeführt und steht sodann als Generatorgas zur Verfügung.

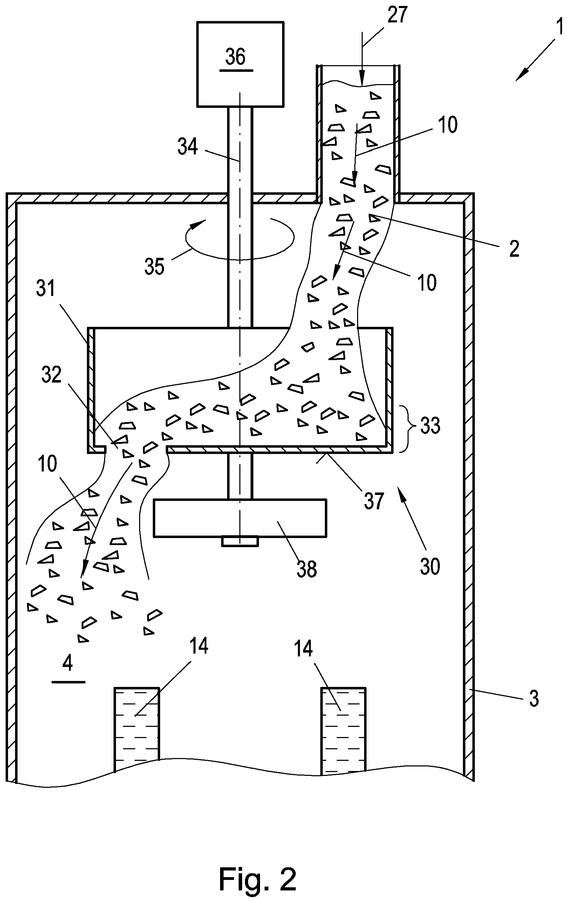

In Fig. 2 wird in einer schematischen Schnittansicht eine erfindungsgemäße Verteilereinrichtung 30 zur Verteilung von Biomasse 2 gezeigt. Diese Verteilereinrichtung 30 ist am oberen Ende des Reaktorbehälters 3 im Inneren des Vergasungsraums 4 angeordnet. Ein an seiner Oberseite offener Behälter 31, beispielsweise mit einem kreisförmigen Boden und mit mehreren exzentrisch angeordneten Öffnungen 32, die in einem unteren Abschnitt 33 bzw. im Boden des Behälters 31 angeordnet sind, sowie mit einer umlaufenden Seitenwand versehen, ist an einer drehbaren Antriebswelle 34 befestigt. Die Antriebswelle 34 rotiert in Pfeilrichtung 35 und ist bewegungsmäßig mit einem eigenen Antrieb 36 gekoppelt.

Auch andere Gestaltungsformen des Behälters 31 sind denkbar. So kann der Behälter 31 beispielsweise auch trichter- bzw. kegelförmig ausgeführt sein, wobei in der Nähe der Spitze des oben offenen Trichters, also des tiefsten Punktes des Behälters 31, eine exzentrisch angeordnete Öffnung 32 vorgesehen ist. Diese Ausführungsvariante ist nicht dargestellt.

Durch die Rotationsbewegung des Behälters 31 wird die Biomasse 2, die durch einen Aufgabeschacht von außen in den Vergasungsreaktor 1 und von oben in Förderrichtung 10 in den Behälter 31 gelangt, radial nach außen gefördert und verlässt diesen durch die Öffnungen 32. An der Unterseite 37 des Behälters 31 ist ein Rührwerk 38 an der Antriebswelle 34 befestigt, das sich gemeinsam mit dem Behälter 31 mitdreht. Durch das Rührwerk 38 wird eine gleichmäßige Verteilung der aufgegebenen Biomasse 2 im Inneren des Vergasungsraums 4 erreicht und die Trocknungsgeschwindigkeit der Biomasse 2 somit erhöht. Der Wirkungsgrad des erfindungsgemäßen Vergasungsreaktors 1 sowie die Gasqualität des erzeugten Brenngases 39 werden dadurch verbessert. Durch die homogenere Schüttung der Biomasse 2 in der Trocknungszone lassen sich alle Reaktionszonen im Reaktor besser regulieren und der Vergasungsprozess läuft stabiler und gleichmäßiger ab.

Das Rührwerk 38 kann zweckmäßig auch direkt an der Unterseite 37 bzw. am unteren Abschnitt 33 des rotierenden Behälters 31 befestigt sein. Je nach Bauart des Reaktors 1 bzw. abhängig von der Beschaffenheit der zu vergasenden Biomasse 10 sind unterschiedliche Ausführungsformen des Rührwerks 38 denkbar. Beispielsweise kann das Rührwerk 38 als Blatt- oder Schaufelrührer, als Rechenförmiges Gitter oder als gebogenes Rohr ausgeführt sein.

Weiters kann zweckmäßig zumindest ein Rührwerk 38 auch mit einem eigenen Antrieb, der unabhängig vom Antrieb 36 des Behälters 31 ist, versehen sein. Auch Varianten mit mehreren Rührwerken 38, die vom Behälter 31 unabhängig über den Querschnitt des Vergasungsraums 4 verteilt angeordnet sind und eine besonders gleichmäßige Verteilung der aufgegebenen Biomasse 10 gewährleisten, sind denkbar.

### Verzeichnis der Positionsnummern:

- 1: Reaktor
- 2: Biomasse
- 3: Reaktorbehälter
- 4: Vergasungsraum
- 5: Oxidationszone
- 6: Luftzuführelemente
- 7: Austrittsöffnungen der Luftzuführelemente 6
- 8: Luft bzw. Vergasungsmittel (Zufuhr in Pfeilrichtung)
- 9: Ausströmrichtung des Vergasungsmittels 9 (in Pfeilrichtung)
- 10: Förderrichtung der Biomasse 2 (in Pfeilrichtung)
- 11: Isolierungsabschnitt des Luftzuführelementes 6
- 12: Isolierungsschicht des Luftzuführelementes 6
- 13: Wärmetauschabschnitt
- 14: Wärmetauscher
- 15: Versorgungsleitung
- 16: Temperiervorrichtung für das Vergasungsmittel 8
- 17: Reaktorwandung
- 18: Temperierabschnitt der Reaktorwandung 17
- 19: Temperiermedium
- 20: sekundäre Luftzuführelemente
- 21: Wärmespeicherabschnitt
- 22: Wärmespeicherelement
- 23: Temperatursensor im Vergasungsraum
- 24: Eintritt des Temperiermediums 19 (in Pfeilrichtung)
- 25: Austritt des Temperiermediums 19 (in Pfeilrichtung)
- 26: Temperatursensor für Temperiermedium 19
- 27: Zuluft (Zufuhr in Pfeilrichtung)
- 28: Dampfzufuhr (Pfeilrichtung)
- 29: Steuereinheit
- 30: Verteilereinrichtung
- 31: Behälter
- 32: Öffnung
- 33: unterer Abschnitt des Behälters 31
- 34: Antriebswelle
- 35: Drehrichtung des Behälters 31 (Pfeilrichtung)
- 36: Antrieb
- 37: Unterseite des Behälters 31
- 38: Rührwerk
- 39: Brenngas

## Patentansprüche

1. Reaktor (1) zur Vergasung von Biomasse (2), mit einem Reaktorbehälter (3), der einen Vergasungsraum (4) mit einer Oxidationszone (5) definiert, welcher Oxidationszone (5) von außerhalb des Reaktorbehälters (3) ein sauerstoffhaltiges Vergasungsmittel (8), insbesondere Luft, zuführbar ist, wobei kontinuierlich Biomasse (2) zur Oxidationszone (5) im Vergasungsraum (4) förderbar ist, sowie im Reaktorbehälter (3) Luftzuführelemente (6) mit Austrittsöffnungen (7) im Bereich der Oxidationszone (5) angeordnet sind, die sich in Förderrichtung (10) der Biomasse (2) erstrecken, wobei die Luftzuführelemente (6) jeweils in Lanzenform ausgebildet sind, **dadurch gekennzeichnet, dass** die Luftzuführelemente (6) entlang zumindest eines Isolierungsabschnitts (11) mit einer außenseitigen Isolierungsschicht (12) versehen sind.

2. Reaktor (1) nach Anspruch 1, **dadurch gekennzeichnet, dass** die Luftzuführelemente (6) gruppenweise mit einer gemeinsamen Isolierungsschicht (12) entlang zumindest eines Isolierungsabschnitts (11) versehen sind.

3. Reaktor (1) nach Anspruch 1 oder 2, **dadurch gekennzeichnet, dass** die Luftzuführelemente (6) entlang zumindest eines Wärmetauschabschnitts (13) mit einem außenseitigen Wärmetauscher (14) versehen sind.

4. Reaktor (1) nach einem der Ansprüche 1 bis 3, **dadurch gekennzeichnet, dass** die Luftzuführelemente (6) über den Querschnitt des Vergasungsraums (4) verteilt angeordnet sind.

5. Reaktor (1) nach einem der Ansprüche 1 bis 4, **dadurch gekennzeichnet, dass** die Luftzuführelemente (6) ringförmig im Vergasungsraum (6) angeordnet sind.

6. Reaktor (1) nach einem der Ansprüche 1 bis 5, **dadurch gekennzeichnet, dass** die Luftzuführelemente (6) gemeinsam oder gruppenweise mit einer Versorgungsleitung (15) verbunden sind.

7. Reaktor (1) nach einem der Ansprüche 1 bis 6, **dadurch gekennzeichnet, dass** eine Vorrichtung (16) zur Temperierung des Vergasungsmittels (8) vorgesehen ist.

8. Reaktor (1) nach einem der Ansprüche 1 bis 7, **dadurch gekennzeichnet, dass** zumindest ein Abschnitt (18) der Reaktorwandung (17) und/oder von Einbauten in der Oxidationszone (5), insbesondere ein oberhalb der Austrittsöffnungen (7) der Luftzuführelemente (6) gelegener Abschnitt (18) temperierbar ist.

9. Reaktor (1) nach einem der Ansprüche 1 bis 8, **dadurch gekennzeichnet, dass** zumindest ein Abschnitt (18) der Reaktorwandung (17) und/oder von Einbauten oberhalb der Oxidationszone (5) des Vergasungsraums (4) beheizbar ist.

10. Reaktor (1) nach einem der Ansprüche 1 bis 9, **dadurch gekennzeichnet, dass** Wärmespeicherelemente (22) an zumindest einem Abschnitt (21) der Reaktorwandung (17) und/oder von Einbauten in der Oxidationszone (5) angeordnet sind.

11. Reaktor (1) nach einem der Ansprüche 1 bis 10, **dadurch gekennzeichnet, dass** oberhalb der Oxidationszone (5) zumindest ein Sensor (23) zur Überwachung der Temperatur vorgesehen ist.

12. Reaktor (1) nach einem der Ansprüche 1 bis 10, **dadurch gekennzeichnet, dass** am Austritt (25) des Temperiermediums (19) zumindest ein Sensor (26) zur Überwachung der Temperatur vorgesehen ist.

13. Reaktor (1) nach Anspruch 11 oder 12, **dadurch gekennzeichnet, dass** eine Steuereinheit (29) anhand der Signale des Sensors (23, 26) zur Temperaturüberwachung die Vorrichtung (16) zur Temperierung des Vergasungsmittels (8) und/oder die Temperierung der Wärmetauscher (14) der Luftzuführelemente (6) und/oder des Temperierabschnittes (18) der Reaktorwandung (17) und/oder von Einbauten innerhalb des Vergasungsraums (4) oberhalb der Oxidationszone (5) und/oder das Verhältnis zwischen dem zugeführten Vergasungsmittel (8) und der Zuluft (27) und/oder die Zufuhr von Dampf (28) steuert.

14. Reaktor (1) nach einem der Ansprüche 1 bis 13, **dadurch gekennzeichnet, dass** eine Verteilereinrichtung (30) für Biomasse (2) einen Behälter (31) mit zumindest einer an seinem unteren Abschnitt (33) exzentrisch angeordneten Öffnung (32) umfasst, wobei der Behälter (31) im Vergasungsraum (4) an einer Antriebswelle (34) befestigt drehbar beweglich angeordnet ist.

15. Reaktor (1) nach Anspruch 14, **dadurch gekennzeichnet, dass** die Antriebswelle (34) des Behälters (31) senkrecht stehend von außerhalb des Reaktorbehälters (3) in den Vergasungsraum (4) durchgeführt ist.

16. Reaktor (1) nach Anspruch 14 oder 15, **dadurch gekennzeichnet, dass** die Antriebswelle (34) mit einem eigenen Antrieb (36) bewegungsmäßig gekoppelt ist.

17. Reaktor (1) nach einem der Ansprüche 14 bis 16, **dadurch gekennzeichnet, dass** an der Verteilereinrichtung (30) an der Unterseite (37) des Behälters (31) ein Rührwerk (38) angeordnet ist.

## Claims

1. Reactor (1) for the gasification of biomass (2), with a reactor vessel (3) defining a gasification space (4) with an oxidation zone (5), wherein an oxygen-containing gasification agent (8), in particular air, may be supplied to the oxidation zone (5) from outside the reactor vessel (3), wherein biomass (2) may be continuously conveyed to the oxidation zone (5) in the gasification space (4) and air supply elements (6) with outlet openings (7) are arranged in the area of the oxidation zone (5) in the reactor vessel (3), which extend in the conveying direction (10) of the biomass (2), wherein the air supply elements (6) are respectively configured in a lance form, **characterised in that** the air supply elements (6) are provided with an external isolating layer (12) along at least one isolating section (11).

2. Reactor (1) according to claim 1, **characterised in that** the air supply elements (6) are provided in groups with a common isolating layer (12) along at least one isolating section (11).

3. Reactor (1) according to claims 1 or 2, **characterised in that** the air supply elements (6) are provided with an external heat exchanger (14) along at least one heat exchange section (13).

4. Reactor (1) according to any one of claims 1 to 3, **characterised in that** the air supply elements (6) are arranged distributed over the cross section of the gasification space (4).

5. Reactor (1) according to any one of claims 1 to 4, **characterised in that** the air supply elements (6) are arranged in a ring form in the gasification space (6).

6. Reactor (1) according to any one of claims 1 to 5, **characterised in that** the air supply elements (6) are connected jointly or in groups to a supply line (15).

7. Reactor (1) according to any one of claims 1 to 6, **characterised in that** a device (16) for controlling the temperature of the gasification agent (8) is provided.

8. Reactor (1) according to any one of claims 1 to 7, **characterised in that** at least one section (18) of the reactor wall (17) and/or of installations in the oxidation zone (5), in particular a section (18) located above the outlet openings (7) of the air supply elements (6), can be temperature-controlled.

9. Reactor (1) according to any one of claims 1 to 8, **characterised in that** at least one section (18) of the reactor wall (17) and/or of installations above the oxidation zone (5) of the gasification space (4) can be heated.

10. Reactor (1) according to any one of claims 1 to 9, **characterised in that** heat storage elements (22) are arranged on at least one section (21) of the reactor wall (17) and/or of installations in the oxidation zone (5).

11. Reactor (1) according to any one of claims 1 to 10, **characterised in that** at least one sensor (23) for monitoring the temperature is provided above the oxidation zone (5).

12. Reactor (1) according to any one of claims 1 to 10, **characterised in that** at least one sensor (26) for monitoring the temperature is provided at the outlet (25) of the temperature-controlling medium (19).

13. Reactor (1) according to claims 11 or 12, **characterised in that**, on the basis of the signals from the sensor (23, 26) for monitoring the temperature, a control unit (29) controls the device (16) for controlling the temperature of the gasification agent (8), and/or the control of the temperature of the heat exchangers (14) of the air supply elements (6) and/or of the temperature-control section (18) of the reactor wall (17) and/or of the installations within the gasification space (4) above the oxidation zone (5), and/or the ratio between the supplied gasification agent (8) and the supplied air (27), and/or the supply of steam (28).

14. Reactor (1) according to any one of claims 1 to 13, **characterised in that** a distributor device (30) for biomass (2) comprises a vessel (31) having at least one opening (32) which is arranged eccentrically on its lower section (33), wherein the vessel (31) is arranged rotatably movable in the gasification space (4), fixed to a drive shaft (34).

15. Reactor (1) according to claim 14, **characterised in that** the drive shaft (34) of the vessel (31) is passed through into the gasification space (4) in a vertically standing manner from outside the reactor vessel (3).

16. Reactor (1) according to claims 14 or 15, **characterised in that** the drive shaft (34) is movably coupled to its own drive (36).

17. Reactor (1) according to any one of claims 14 to 16, **characterised in that** a stirrer (38) is arranged on the distributor device (30) on the bottom side (37) of the vessel (31).

## Revendications

1. Réacteur (1) pour la gazéification de biomasse (2), avec un récipient de réacteur (3), qui définit un espace de gazéification (4) avec une zone d'oxydation (5), laquelle zone d'oxydation (5) peut être alimentée de l'extérieur du récipient de réacteur (3) en un agent de gazéification (8) contenant de l'oxygène, par exemple en air, une biomasse (2) pouvant être transportée en continu vers la zone d'oxydation (5) dans l'espace de gazéification (4), et avec des éléments d'amenée d'air (6) dans le récipient de réacteur (3) qui sont munis d'ouvertures de sortie (7) et agencés dans la région de la zone d'oxydation (5) et qui s'étendent dans la direction de transport (10) de la biomasse (2), les éléments d'amenée d'air (6) étant réalisés chacun sous forme de lance, **caractérisé en ce que** les éléments d'amenée d'air (6) sont munis d'une couche d'isolation (12) côté extérieur le long d'au moins un tronçon d'isolation (11).

2. Réacteur (1) selon la revendication 1, **caractérisé en ce que** les éléments d'amenée d'air (6) sont munis d'une couche d'isolation commune (12) de manière groupée le long d'au moins un tronçon d'isolation (11).

3. Réacteur (1) selon la revendication 1 ou 2, **caractérisé en ce que** les éléments d'amenée d'air (6) sont munis d'un échangeur de chaleur (14) côté extérieur le long d'au moins un tronçon d'échangeur de chaleur (13).

4. Réacteur (1) selon l'une quelconque des revendications 1 à 3, **caractérisé en ce que** les éléments d'amenée d'air (6) sont agencés de manière répartie sur la section transversale de l'espace de gazéification (4).

5. Réacteur (1) selon l'une quelconque des revendications 1 à 4, **caractérisé en ce que** les éléments d'amenée d'air (6) sont agencés en forme d'anneau dans l'espace de gazéification (6).

6. Réacteur (1) selon l'une quelconque des revendications 1 à 5, **caractérisé en ce que** les éléments d'amenée d'air (6) sont reliés de manière commune ou groupée à une conduite d'alimentation (15).

7. Réacteur (1) selon l'une quelconque des revendications 1 à 6, **caractérisé en ce qu'il** est prévu un dispositif (16) destiné à tempérer l'agent de gazéification (8).

8. Réacteur (1) selon l'une quelconque des revendications 1 à 7, **caractérisé en ce qu'au** moins une partie (18) de la paroi de réacteur (17) et/ou d'éléments installés dans la zone d'oxydation (5), en particulier une partie (18) placée au-dessus des ouvertures de sortie (7) des éléments d'amenée d'air (6), peut être tempérée.

9. Réacteur (1) selon l'une quelconque des revendications 1 à 8, **caractérisé en ce qu'au** moins une partie (18) de la paroi de réacteur (17) et/ou d'éléments installés au-dessus de la zone d'oxydation (5) de l'espace de gazéification (4) peut être chauffée.

10. Réacteur (1) selon l'une quelconque des revendications 1 à 9, **caractérisé en ce que** des éléments accumulateurs de chaleur (22) sont agencés au niveau d'au moins une partie (21) de la paroi de réacteur (17) et/ou d'éléments installés dans la zone d'oxydation (5).

11. Réacteur (1) selon l'une quelconque des revendications 1 à 10, **caractérisé en ce qu'au** moins un capteur (23) destiné à surveiller la température est prévu au-dessus de la zone d'oxydation (5).

12. Réacteur (1) selon l'une quelconque des revendications 1 à 10, **caractérisé en ce qu'au** moins un capteur (26) destiné à surveiller la température est prévu au niveau de la sortie (25) de l'agent destiné à tempérer (19).

13. Réacteur (1) selon la revendication 11 ou 12, **caractérisé en ce qu'une** unité de commande (29) commande à l'aide des signaux du capteur (23, 26) destiné à surveiller la température le dispositif (16) destiné à réguler la température de l'agent de gazéification (8) et/ou la régulation de température de l'échangeur de chaleur (14) des éléments d'amenée d'air (6) et/ou de la partie régulatrice de température (18) de la paroi de réacteur (17) et/ou d'éléments installés à l'intérieur de l'espace de gazéification (4) au-dessus de la zone d'oxydation (5) et/ou le rapport entre l'agent de gazéification (8) amené et l'air entrant (27) et/ou l'amenée de vapeur (28).

14. Réacteur (1) selon l'une quelconque des revendications 1 à 13, **caractérisé en ce qu'un** dispositif distributeur (30) pour la biomasse (2) comprend un récipient (31) avec au moins une ouverture (32) agencée de manière excentrée au niveau de sa partie inférieure (33), lequel récipient (31) est agencé dans l'espace de gazéification (4) de manière à être fixé à un arbre moteur (34) et mobile en rotation.

15. Réacteur (1) selon la revendication 14, **caractérisé en ce que** l'arbre moteur (34) du récipient (31) traverse verticalement l'espace de gazéification (4) à partir de l'extérieur du récipient de réacteur (3).

16. Réacteur (1) selon la revendication 14 ou 15, **caractérisé en ce que** l'arbre moteur (34) est couplé pour le mouvement à un dispositif d'entraînement (36) qui lui est propre.

17. Réacteur (1) selon l'une quelconque des revendications 14 à 16, **caractérisé en ce qu'un** mélangeur (38) est agencé au niveau du dispositif distributeur (30) au niveau du dessous (37) du récipient (31).
